# EUROPÄISCHE PATENTSCHRIFT

(11) **EP 0 619 137 B1**
(45) Veröffentlichungstag und Bekanntmachung des Hinweises auf die Patenterteilung: **17.06.1998**
(21) Anmeldenummer: 93810253.0
(22) Anmeldetag: 08.04.1993
(51) Int. Cl.: B01J 2/00, B01J 2/10

(54) **Verfahren zur Herstellung feinkörniger Granulate**
Process to prepare finely granulated material
Procédé pour préparer des solides à grain fin

(43) Veröffentlichungstag der Anmeldung: 12.10.1994
(73) Patentinhaber: Ciba Specialty Chemicals Holding Inc., 4057 Basel (CH)
(72) Erfinder: Schneeberger, Ricardo, Dr., 4147 Aesch (CH); Horisberger, Hans,, 4132 Muttenz (CH)
(74) Vertreter: Zumstein, Fritz, Dr.

(56) Entgegenhaltungen:
- EP-A- 0 264 049
- EP-A- 0 403 431
- WO-A-88/05345
- FR-A- 2 010 426
- US-A- 4 213 924

## Beschreibung

Die Erfindung betrifft ein Verfahren zur Herstellung feinkörmiger Granulate gemäss Oberbegriff des Patentanspruchs 1.

Es sind verschiedene Verfahren zur Herstellung von Granulaten bekannt. In der US-A-4,578,021 ist ein Granulierverfahren beschrieben, bei dem eine mit Kristallkeimen versehene unterkühlte Schmelze durch Öffnungen einer gelochten Hohlwalze gepresst wird, in der eine rotierende Anpresswalze vorgesehen ist. Die herausgepressten Tropfen fallen auf ein Kühlband und können dort erstarren bzw. auskristallisieren. Die mit diesem Verfahren erzielbaren Granulate weisen eine relativ grosse Korngrösse auf, die durch die Abmessungen der Öffnungen der Hohlwalze bestimmt sind.

Bei einem anderen bekannten Verfahren zur Herstellung von feinkörnigen Granulaten werden trockenes Pulver, Pulvermischungen oder auch zentrifugiertes und anschliessend gewaschenes Kristallisat in einem schnellaufenden Mischer mit Produkt-Schmelze vermischt. Die dabei durch Kristallisation entstehenden Granulate werden aus dem schnellaufenden Mischer ausgetragen und anschliessend in einem Trockner, beispielsweise einem Fliessbett- oder Wirbelschichttrockner getrocknet und/oder gekühlt. Zwar können mit diesem Verfahren feine Granulate hergestellt werden, die zwar staubarm jedoch vielfach nicht abriebfest sind. Ausserdem ist das Verfahren nur eingeschränkt anwendbar. Insbesondere Produkte mit hohen Schmelzpunkten oder mit hohen Viskositäten der Produkt-Schmelze können vielfach nach diesem Verfahren bislang nicht granuliert werden, da die Produkt-Schmelze das Pulver, bzw. die Pulvermischung oder das Kristallisat im schnellaufenden Mischer nicht ausreichend benetzt. Aufgrund der langen Kristallisationszeit kristallisiert die Produkt-Schmelze oft nur unvollständig und es kommt zu Krustenbildung im Mischer und zu Verklumpungen, welche die Leitungen verstopfen können.

Aus WO-A-88/05345 ist ein Verfahren zur Herstellung von Granulaten in einem Mischer, ausgehend von einer Schmelze und einem Pulver, bekannt, das in eine gegenüber der Atmosphäre abgedichtete umlaufende Trommel eingeführt wird, in die über Düsen Schmelze eingesprüht wird, wobei im wesentlichen gleichzeitig ein Inertgasstrom in die Trommel eingeleitet wird.

Aufgabe der Erfindung ist es daher, ein Verfahren zur Herstellung von feinen Granulaten bereitzustellen, mit dem weitgehend staubfreie, stabile durchkristallisierte Granulate oder Agglomerate herstellbar sind. Das Verfahren soll auch bei Produkten mit hohen Schmelzpunkten und/oder mit hohen Viskositäten der Produkt-Schmelze anwendbar sein. Das Verfahren soll es erlauben, Produkte aus Mischungen einer beliebigen Anzahl von Komponenten in kleinen Korngrössen zu granulieren.

Diese Aufgaben werden erfindungsgemäss durch ein Verfahren gelöst, welches die im kennzeichnenden Teil des Patentanspruchs 1 angeführten Verfahrensschritte umfasst. Bei dem erfindungsgemässen Verfahren zur Herstellung feinkörniger Granulate wird eine Produkt-Schmelze aus einem Schmelzetank gekühlt und sodann in einem schnellaufenden Mischer dosiert oder versprüht und dort mit trockenem Pulver, Pulvermischungen oder auch zentrifugiertem und anschliessend gewaschenen Kristallisat aus einem Silo in Kontakt gebracht. Dabei entsteht durch Kristallisation Granulat, welches aus dem schnellaufenden Mischer ausgetragen und anschliessend in einem Trockner, beispielsweise einem Fliessbett oder Wirbelschichttrockner, getrocknet und/oder gekühlt wird und anschliessend dem Trockner entnommen wird. Vor dem Abkühlen wird die Produkt-Schmelze mit einem Lösungsmittel vermischt, und dadurch ihre Viskosität stark erniedrigt und ihre Benetzungsfähigkeit in Bezug auf das Pulver, das Kristallisat bzw. die Pulvennischungen wesentlich erhöht. Im Anschluss daran wird das Produkt-Schmelze/Lösungsmittel Gemisch vorzugsweise in den metastabilen Bereich der Löslichkeitskurve unterkühlt, sodass im schnellaufenden Mischer eine rasche Kristallisation einsetzt. Dabei wird die Temperatur des Produkt-Schmelze/Lösungsmittel Gemisches derart geregelt, dass das Gemisch am Sprühaustritt im schnellaufenden Mischer nicht siedet. Auf diese Weise wird die Viskosität der Produkt-Schmelze deutlich verringert und die Benetzungsfähigkeit der Produkt-Schmelze stark verbessert. Im schnellaufenden Mischer erfolgt die Kristallisation sehr rasch, und es wird eine Krustenbildung und Verklumpungen vermieden. Bevorzugte Verfahrensvarianten sind Gegenstand der abhängigen Patentansprüche.

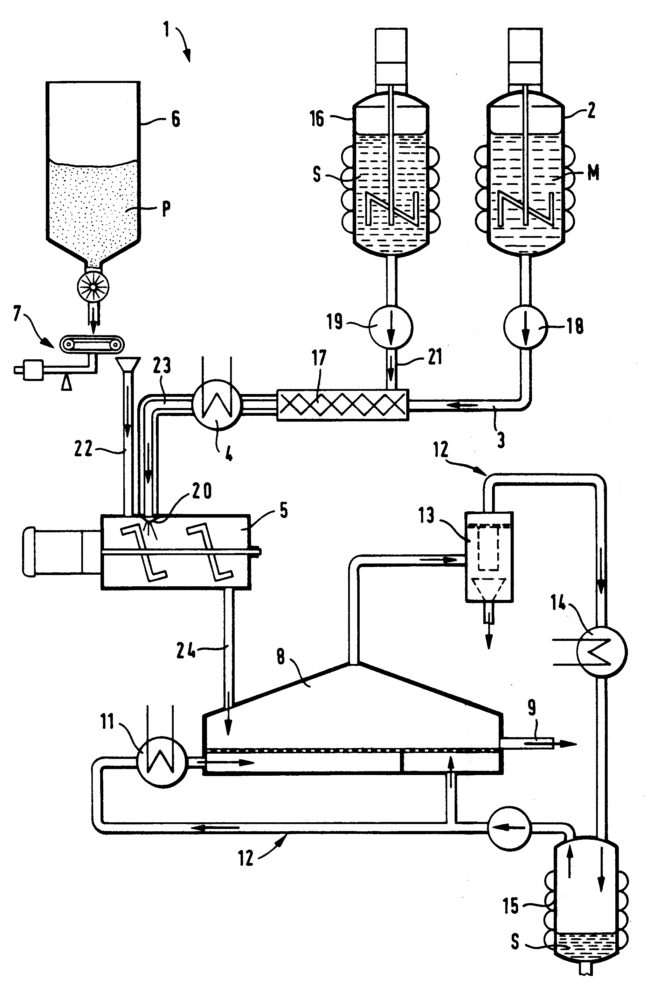

Im folgenden wird das erfindungsgemässe Verfahren unter Bezugnahme auf die einzige Figur näher erläutert, welche schematisch eine Granulationsanlage zur Durchführung des erfindungsgemässen Verfahrens zeigt.

Die Granulationsanlage ist gesamthaft mit 1 bezeichnet. Sie umfasst einen Schmelzetank 2, von dem mit Hilfe einer Pumpe 18 eine Produkt-Schmelze M über eine Rohrleitung 3 zu einem Kühler 4 gefördert wird. In dem Kühler wird die Produkt-Schmelze M unterkühlt. Von dem Kühler gelangt sie über eine Rohrleitung 23 zu einem schnellaufenden Mischer 5. Ein derartiger Mischer dieser Firma ist beispielsweise in dem Firmenprospekt Nr. wd 10.84 Rec.-d-26.30000 M der Firma Gebrüder Lödige Maschinenbau-GmbH, Elsener Str. 7-9, Postfach 2050, D-4790 Paderborn beschrieben. In dem schnellaufenden Mischer 5 wird die Produkt-schmelze M über Sprühdüsen 20 oder Verteilrohre dosiert oder fein versprüht und kommt dabei in Kontakt mit einem Pulver, einer Pulvermischung oder einem Kristallisat, das zentrifugiert und anschliessend gewaschen wurde, in Verbindung. Das Pulver bzw. Pulvergemisch oder Kristallisat ist in einem Pulversilo 6 gelagert. Eine mit Hilfe einer Abwägeinrichtung 7 abgewogene Menge wird über eine Rohrleitung 22 in den schnellaufenden Mischer eingebracht. Im Mischer 5 lagern sich die versprühten Produkt-Schmelzetröpfchen an das Pulver bzw. das Kristallisat an, welches wie ein Kristallisationskeim wirkt und im allgemeinen eine schnelle Kristallisation auslöst. Das gebildete Granulat wird über eine Rohrleitung 24 zu einem Trockner 8, beispielsweise ein Fliessbett- oder ein Wirbelschichttrockner, gefördert und dort getrocknet und/oder gekühlt. Das getrocknete und/oder gekühlte Granulat wird schliesslich über eine Rohrleitung 9 aus dem Trockner 8 entfernt.

Bevor die Produkt-Schmelze M im Kühler 4 unterkühlt wird, wird sie mit einem Lösungsmittel S vermischt, welches mit Hilfe einer Pumpe 19 über eine Rohrleitung 21 aus einem Lösungsmitteltank 16 zu einer Mischeinrichtung 17 gefördert wird. Durch die Vermischung der Produkt-Schmelze M mit dem Lösungsmittel S wird die Viskosität der Produkt-Schmelze stark erniedrigt, beispielsweise von etwa 1.000 bis über 100.000 mPas bis auf etwa 30 bis 1.500 mPas verringert. Zugleich wird die Benetzungsfähigkeit der Produkt-Schmelze M in Bezug auf das Pulver, Kristallisat bzw. Pulvergemisch wesentlich erhöht. Das Produkt-Schmelze/Lösungsmittel Gemisch wird im Kühler 4 vorzugsweise in den metastabilen Bereich der Löslichkeitskurve unterkühlt. Auf diese Weise ist gewährleistet, dass das versprühte Produkt-Schmelze/Lösungsmittelgemisch im schmellaufenden Mischer 5 bei Kontakt mit dem Pulver, Pulvergemisch bzw. Kristallisat P sehr rasch kristallisiert. Die Temperatur des Produkt-Schmelze/Lösungsmittel Gemisches wird derart geregelt, dass das Gemisch am Sprühaustritt 20 nicht siedet. Es versteht sich, dass dazu die Rohrleitung 23 zwischen dem Kühler 4 und dem schnellaufenden Mischer 5 geregelt beheizbar ausgebildet ist. Beispielsweise handelt es sich bei der Rohrleitung 23 um ein Doppelmantelrohr, in dem eine temperierbare Heizflüssigkeit zirkuliert.

In der Mischeinrichtung 17 wird kontinuierlich Produkt-Schmelze M mit dem Lösungsmittel S. Um die Lösung zu übersättigen, wird das Produkt-Schmelze/Lösungsmittel Gemisch unterkühlt. Ausgehend von der Löslichkeitsgleichgewichtstemperatur (an der eine gesättigte Lösung vorliegt) wird das Produkt-Schmelze/Lösungsmittel Gemisch bis zu 70°C unterkühlt. Der Grad der Übersättigung steigt dabei mit dem Grad der Unterkühlung.

Bei der Regelung der Temperatur der übersättigten Lösung wird vorzugsweise darauf geachtet, dass die Temperatur der übersättigten Lösung niedriger gehalten wird als die Siedetemperatur des Lösungsmittels. Die Temperatur kann höher gewählt werden, wenn das Produkt-Schmelze/Lösungsmittel Gemisch bei erhöhtem Druck gemischt und transportiert wird. Dabei zeigt sich auch, dass mit geringeren Mengen an Lösungsmittel S das Auslangen gefunden wird. Vorzugsweise wird ein Überdruck von etwa 0 bar bis etwa 5 bar eingestellt.

Um zu verhindern, dass aus dem Produkt-Schmelze/Lösungsmittel Gemisch Lösungsmittel verdampft und Kristallisation einsetzt, die zu Verstopfungen der Leitungen führen kann, wird die Vermischung des Lösungsmittels S mit der Produkt-Schmelze in einem geschlossenen System durchgeführt, wobei darauf geachtet wird, dass das System Gaspolster-frei ist.

Besonders vorteilhaft ist es, wenn die Mischeinrichtung 17, in der die Vermischung der Produkt-Schmelze M mit dem Lösungsmittel S erfolgt, ein Statikmischer ist. Derartige Statikmischer werden vielfach in der chemischen Synthese eingesetzt und sind beispielsweise in einem Artikel von Adolf Heierle "Statische Mischer - Wärmeaustauscher", in chemie-anlagen + verfahren 7/89 beschrieben. Die Vorteile eines Statikmischers sind im Hinblick auf das erfindungsgemässe Verfahren insbesondere dadurch gegeben, dass das System gaspolsterfrei ist. Zudem weist er keine bewegten Teile auf, ist gut reinigbar und kostengünstig. Anstelle eines Statilmischer könnte aber auch ein Rotor-Stator Mischersystem eingesetzt werden.

Die erzielbare Korngrösse des hergestellten Granulates kann durch Variation des Verhältnisses der Mengen des Lösungsmittels S und der Produkt-Schmelze verändert werden. Vorzugsweise wird das Mengenverhältnis derart eingestellt, dass Korngrössen des Granulates von etwa 0,15 mm bis etwa 1 mm, bei einer Schwankungsbreite von bis zu etwa ± 0,3 mm erreicht werden.

Bei dem erfindungsgemässen Verfahren zur Herstellung von feinkörnigen Granulaten werden vorzugsweise polare Lösungsmittel, wie beispielsweise Methanol, Isopropanol oder Wasser eingesetzt. Die Rückgewinnung des Lösungsmittels S erfolgt beim Trockenvorgang des Granulats im Trockner 8. Dieser weist neben einem Inertgaskreislauf 12 zum Bereitstellen von in einem Erhitzer 11 erwärmten Inertgas auch noch einen Filter 13, einen Kondensator 14 und einen Lösungsmittelabscheider 15 auf, mit Hilfe derer das im Trockner abgedampfte Lösungsmittel S auf bekannte Weise zurückgewonnen werden kann.

Durch die Vermischung der Produkt-Schmelze mit einem Lösungsmittel wird die Viskosität der Produkt-Schmelze stark verringert. Dadurch können auch viele hochviskose Produkt-Schmelzen in einem schnellaufenden Mischer granuliert werden. Zudem wird durch die Vermischung der Produkt-Schmelze mit dem Lösungsmittel auch die Benetzungsfähigkeit der versprühten Produkt-Schmelze mit dem Pulver, Pulvergemisch bzw. Kristallisat deutlich erhöht, wodurch die Kristallisationszeit stark verringert wird. Daher ist das erfindungsgemässe Verfahren auch für die Granulation von Produkt-Schmelzen von Antioxidantien, Stabilisatoren oder Lichtschutzmitteln geeignet, welche unvermischt üblicherweise eine zu hohe Viskosität aufweisen. Durch die Unterkühlung des Produkt-Schmelze/Lösungsmittel Gemisches ist im schnellaufenden Mischer eine Spontankristallisation gewährleistet. Dadurch wird eine Krustenbildung an den Wänden des schnellaufenden Mischers verhindert und einer Verklumpung, die die Rohrleitungen verstopfen könnte, vorgebeugt. Die Temperaturführung des erfindungsgemässen Verfahren ist derart gewählt, dass eine unerwünschte Kristallisation in den Rohrleitungen oder im Kühler weitgehend ausgeschaltet ist.

Das erfindungsgemässe Verfahren ist für ein- oder mehrkomponentige Pulver einsetzbar. Das heisst, es können neben reinen Substanzen auch Pulver-Mischungen in feinen Korngrössen granuliert werden. Die Komponenten der Pulver-Mischungen können vorgemischt oder in einem entsprechend verlängertem Mischteil direkt im schnellaufenden Mischer gemischt werden. Dabei wird beispielsweise eine der Komponenten als Produkt-Schmelze vorgelegt, die mit dem Lösungsmittel vermischt wird, bevor sie vorzugsweise unterkühlt und im schnellaufenden Mischer dosiert oder versprüht wird.

## Patentansprüche

1. Verfahren zur Herstellung feinkörniger Granulate, bei dem eine Produkt-Schmelze (M) aus einem Schmelzetank (2) gekühlt wird, und sodann in einem schnellaufenden Mischer (5) dosiert oder versprüht wird und mit trockenem Pulver, Pulvermischungen oder auch zentrifugiertem und anschliessend gewaschenen Kristallisat (P) aus einem Silo (6) in Kontakt gebracht wird, wobei durch Kristallisation Granulat entsteht, welches aus dem schnellaufenden Mischer (5) ausgetragen und anschliessend in einem Trockner (8), beispielsweise einem Fliessbett- oder Wirbelschichttrockner, getrocknet und/oder gekühlt wird und anschliessend dem Trockener (8) entnommen wird, dadurch gekennzeichnet, dass die Produkt-Schmelze (M) vor der Abkühlung mit einem Lösungsmittel (S) vermischt wird, und dadurch ihre Viskosität stark erniedrigt und ihre Benetzungsfähigkeit in Bezug auf das Pulver, das Kristallisat bzw. die Pulvermischungen (P) wesentlich erhöht wird, dass das ProduktSchmelze/Lösungsmittel Gemisch gekühlt wird, sodass im schnellaufenden Mischer (5) eine rasche Kristallisation einsetzt, und dass die Temperatur des Produkt-Schmelze/Lösungsmittel Gemisches derart geregelt wird, dass das Gemisch am Sprühaustritt (20) im schnellaufenden Mischer (5) nicht siedet.

2. Verfahren nach Anspruch 1, dadurch gekennzeichnet, dass das Produkt-Schmelze/Lösungsmittel Gemisch on-line durch Unterkühlung als übersättigte Lösung hergestellt wird, wobei das Produkt-Schmelze/Lösungsmittel Gemisch ausgehend von der Löslichkeitgleichgewichtstemperatur um bis zu etwa 70°C unterkühlt wird.

3. Verfahren nach Anspruch 2, dadurch gekennzeichnet, dass die Temperatur der übersättigten Lösung niedriger als die Siedetemperatur des Lösungsmittels gehalten wird.

4. Verfahren nach einem der vorangehenden Ansprüche, dadurch gekennzeichnet, dass die Vermischung der Produkt-Schmelze (M) und des Lösungsmittels (S) unter hohem Druck erfolgt wobei ein Überdruck von etwa 0 bar bis etwa 5 bar gewählt

5. Verfahren nach einem der vorangehenden Ansprüche, dadurch gekennzeichnet, dass die Vermischung der Produkt-Schmelze (M) und des Lösungsmittels (S) in einem geschlossenen System ohne Gaspolster erfolgt.

6. Verfahren nach einem der vorangehenden Ansprüche, dadurch gekennzeichnet, dass die Vermischung der Produkt-Schmelze (M) und des Lösungsmittels (S) in einem Statikmischer (5) erfolgt.

7. Verfahren nach einem der vorangehenden Ansprüche, dadurch gekennzeichnet, dass als Lösungsmittel (S) ein polares Lösungsmittel, beispielsweise Methanol, Isopropanol oder Wasser, eingesetzt wird.

8. Verfahren nach einem der vorangehenden Ansprüche, dadurch gekennzeichnet, dass die Korngrösse des Granulats durch Variation des Verhältnisses der Mengen des Lösungsmittels (S) und der Produktschmelze (M) variiert wird.

9. Verfahren nach Anspruch 8, dadurch gekennzeichnet, dass das Verhältnis der Mengen des Lösungsmittels (S) und der Produktschmelze (M) derart eingestellt wird, dass die Korngrösse des Granulats von etwa 0,15 mm bis etwa 1 mm beträgt.

10. Verfahren nach einem der vorangehenden Ansprüche, dadurch gekennzeichnet, dass die Produktschmelze (M) ein Antioxidanz, ein Stabilisator oder ein Lichtschutzmittel ist.

11. Verfahren nach einem der vorangehenden Ansprüche, dadurch gekennzeichnet, dass durch das Vermischen der Produkt-Schmelze (M) mit dem Lösungsmittel (S) die Viskosität der Produktschmelze von etwa 1.000 bis über 100.000 mPas bis auf etwa 30 bis 1.500 mPas verringert wird, und dass ihre Benetzungsfähigkeit in Bezug auf das Pulver, das Kristallisat bzw. die Pulvermischungen wesentlich erhöht wird.

12. Verfahren nach einem der vorhergehenden Ansprüche, **dadurch gekennzeichnet,** daß das Produkt-Schmelz/Lösungsmittel-Gemisch in den metastabilen Bereich der Löslichkeitskurve unterkühlt wird.

## Claims

1. Method for producing fine-grained granules, wherein a product melt (M) from a melt tank (2) is cooled and then dosed or sprayed in a high-speed mixer (5) and brought in contact with dry powder, powder mixtures, or centrifuged and subsequently washed crystals (P) from a silo (6), whereby granules are formed by crystallization, which granules are withdrawn from the high-speed mixer (5) and then dried and/or cooled in a drier (8), for example a fluidised bed drier and then removed from the drier (8),
**characterized in that**
the product melt (M) is mixed with a solvent (S) before cooling, and thereby the viscosity of the product melt (M) is greatly reduced and its wetting ability in relation to the powder, the crystals or the powder mixtures (P) is significantly increased,
the product melt/solvent mixture is cooled, so crystallisation in the high-speed mixer (5) is effected swiftly, and the temperature of the product melt/solvent mixture is regulated such that the mixture in the high-speed mixer (5) does not boil at the spray outlet (20).

2. Method according to claim 1, characterized in that the product melt/solvent mixture is produced on-line as a saturated solution by supercooling, whereby the product melt/solvent mixture is supercooled by up to approximately 70°C starting from the solubility equilibrium temperature.

3. Method according to claim 2, characterized in that the temperature of the saturated solution is maintained lower than the boiling temperature of the solvent.

4. Method according to one of the preceding claims, characterized in that the mixing of the product melt (M) and the solvent (S) is effected under high pressure, whereby an overpressure of approximately 0 bar to approximately 5 bar is selected.

5. Method according to one of the preceding claims, characterized in that the mixing of the product melt (M) and the solvent (S) is effected in a closed system without any gas cushion.

6. Method according to one of the preceding claims, characterized in that the mixing of the product melt (M) and the solvent (S) is effected in a static mixer (5).

7. Method according to one of the preceding claims, characterized in that a polar solvent, for example methanol, isopropanol or water, is used as the solvent (S).

8. Method according to one of the preceding claims, characterized in that the particle size of the granules is varied by variation of the ratio of solvent (S) to product melt (M).

9. Method according to claim 8, characterized in that the ratio of solvent (S) to product melt (M) is regulated such that the particle size of the granules is from approximately 0.15 mm to approximately 1 mm.

10. Method according to one of the preceding claims, characterized in that the product melt (M) is an antioxidant, a stabilizer or a light stabilizer.

11. Method according to one of the preceding claims, characterized in that by mixing the product melt (M) with the solvent (S), the viscosity of the product melt is reduced from, approximately 1,000 to over 100,000 mPas up to approximately 30 to 1.500 mPas, and that its wetting ability in relation to the powder, the crystals or the powder mixtures is significantly increased.

12. Method according to one of the preceding claims, characterized in that the product melt/solvent mixture is supercooled in the metastable zone of the solubility curve.

## Revendications

1. Procédé de préparation de granulés à granulométrie fine, dans lequel on refroidit une matière fondue de produit (M) dans un bac à matière fondue (2) et l'on ajoute progressivement ou pulvérise dans un mélangeur rapide (5), puis on met en contact avec de la poudre sèche, des mélanges de poudres ou aussi avec de la matière cristallisée (P) centrifugée et ensuite lavée venant d'un silo (6), en formant un granulé par cristallisation, que l'on évacue du mélangeur rapide (5) et on sèche et/ou refroidit ensuite dans un sécheur (8), par exemple un sécheur à lit ou à couche fluidisé et ensuite, on reprend du sécheur (8) , caractérisé en ce que l'on mélange avant refroidissement la matière fondue de produit (M) avec un solvant (S) et, ce faisant, on réduit fortement la viscosité et on augmente essentiellement le pouvoir mouillant par rapport à la poudre, a la matière cristallisée, respectivement au mélange de poudres (P), en ce que l'on refroidit le mélange de matière fondue de produit/solvant, de sorte qu'une cristallisation rapide se mette en place dans le mélangeur rapide (5) et que la température du mélange de matière fondue de produit/solvant soit établie de façon telle que le mélange sortant de la tuyère (20) dans le mélangeur rapide (5) ne soit pas bouillant.

2. Procédé selon la revendication 1, caractérisé en ce que l'on prépare par sous-refroidissement en ligne le mélange de matière fondue de produit/solvant sous forme d'une solution sursaturée, en sous-refroidissant le mélange de matière fondue de produit/solvant en partant de la température d'équilibre de la solubilité jusqu'a environ 70°C.

3. Procédé selon la revendication 2, caractérisé en ce que l'on maintient la température de la solution sursaturée inférieure à la température d'ébullition du solvant.

4. Procédé selon l'une des revendications précédentes, caractérisé en ce que l'on mélange la matière fondue de produit (M) et le solvant (S) sous pression élevée, en choisissant une surpression d'environ 0 bar à environ 5 bar.

5. Procédé selon l'une des revendications précédentes, caractérisé en ce que l'on mélange la matière fondue de produit (M) et le solvant (S) dans un système fermé sans coussin de gaz.

6. Procédé selon l'une des revendications précédentes, caractérisé en ce que l'on effectue le mélangeage de la matière fondue de produit (M) et du solvant (S) dans un mélangeur statique (5).

7. Procédé selon l'une des revendications précédentes, caractérisé en ce que l'on utilise en tant que solvant (S) un solvant polaire, par exemple le méthanol, l'isopropanol ou l'eau.

8. Procédé selon l'une des revendications précédentes, caractérisé en ce que l'on varie la granulométrie du granulé par variation du rapport des quantités du solvant (S) et de la matière fondue de produit (M).

9. Procédé selon la revendication 8, caractérisé en ce que le rapport des quantités du solvant (S) et de la matière fondue de produit (M) est établi de façon telle que la granulométrie du granulé soit d'environ 0,15 mm à environ 1 mm.

10. Procédé selon l'une des revendications précédentes, caractérisé en ce que la matière fondue de produit (M) est un antioxydant, un stabilisant ou un agent photo-protecteur.

11. Procédé selon l'une des revendications précédentes, caractérisé en ce que par mélangeage de la matière fondue de produit (M) avec le solvant (S), on réduit la viscosité de la matière fondue de produit d'environ 1 000 à environ 100 000 mPa.s jusqu'à environ 30 à environ 1 500 mPa.s et que l'on augmente essentiellement le pouvoir mouillant par rapport à la poudre, au produit cristallin, respectivement au mélange de poudres.

12. Procédé selon l'une des revendications précédentes, caractérisé en ce que l'on sous-refroidit le mélange de matière fondue de produit/solvant dans le domaine métastable de la courbe de solubilité.
